# EUROPEAN PATENT APPLICATION

(11) **EP 4 697 275 A1**
(43) Date of publication of application: **18.02.2026**
(21) Application number: 24788425.7
(22) Date of filing: 20.02.2024
(51) Int. Cl.: G06T 13/40

(54) **INFORMATION PROCESSING DEVICE, INFORMATION PROCESSING METHOD, AND STORAGE MEDIUM**

(30) Priority: 14.04.2023 JP 2023066570
(71) Applicant: Sony Group Corporation, Tokyo 108-0075 (JP)
(72) Inventor: KIRIHARA, Reiko, Tokyo 108-0075 (JP); YAMATO, Nao, Tokyo 108-0075 (JP)
(74) Representative: MFG Patentanwälte Meyer-Wildhagen Meggle-Freund Gerhard PartG mbB
(86) International application number: PCT/JP2024/006075
(87) International publication number: WO 2024/214395

(57) **Abstract**

Making it possible to output information indicating a positional relationship of components acquired from a script.

An information processing device including a control unit that acquires information regarding a component from an input script, performs processing of generating, from the information regarding the component, information indicating a positional relationship of one or more components forming a scene, and performs processing of outputting the information indicating the positional relationship.

## Description

### TECHNICAL FIELD

The present disclosure relates to an information processing device, an information processing method, and a storage medium.

### BACKGROUND ART

In production of various moving images such as a movie, a CM, or an animation, conventionally, a script is first produced, and filming or animation production is performed on the basis of the produced script.

Patent Document 1 discloses a technology of analyzing a text of a script by natural language processing, extracting a character, an action, a camerawork and the like, and rendering 3D data according to the extracted information to generate a simple moving image.

### CITATION LIST

### PATENT DOCUMENT

Patent Document 1: U.S. Patent Application Publication No. 2022/0101880

### SUMMARY OF THE INVENTION

### PROBLEMS TO BE SOLVED BY THE INVENTION

Here, a case where the moving image automatically generated by text analysis is a moving image not intended by the user is assumed. However, editing of the moving image generated by using the 3D model requires a change in arrangement of an asset in a 3D space and the like, which is complicated work.

Therefore, the present embodiment makes it possible to output information indicating a positional relationship of components acquired from the script.

### SOLUTIONS TO PROBLEMS

According to the present disclosure, an information processing device including a control unit that acquires information regarding a component from an input script, performs processing of generating, from the information regarding the component, information indicating a positional relationship of one or more components forming a scene, and performs processing of outputting the information indicating the positional relationship.

Furthermore, according to the present disclosure, an information processing method including acquiring information regarding a component from an input script, generating, from the information regarding the component, information indicating a positional relationship of one or more components forming a scene, and outputting the information indicating the positional relationship.

Furthermore, according to the present disclosure, a storage medium storing a program that causes a computer to function as a control unit that acquires information regarding a component from an input script, performs processing of generating, from the information regarding the component, information indicating a positional relationship of one or more components forming a scene, and performs processing of outputting the information indicating the positional relationship.

### BRIEF DESCRIPTION OF DRAWINGS

Fig. 1 is a block diagram illustrating an example of a configuration of an information processing device 10 according to the present embodiment.
Fig. 2 is a flowchart illustrating an example of an operation processing according to the present embodiment.
Fig. 3 is a diagram illustrating an example of an operation screen according to the present embodiment.
Fig. 4 is a diagram illustrating an example of an operation screen according to the present embodiment.
Fig. 5 is a diagram illustrating an example of a display screen of a previs video according to the present embodiment.
Fig. 6 is a diagram illustrating an example of an editing screen using a scene graph according to the present embodiment.
Fig. 7 is a diagram illustrating an example of an editing screen of the layout according to the present embodiment.
Fig. 8 is a diagram illustrating an example of an editing screen of an asset according to the present embodiment.
Fig. 9 is a diagram illustrating an example of an editing screen of a camerawork according to the present embodiment.
Fig. 10 is a diagram for illustrating a method of adding an element according to the present embodiment.

### MODE FOR CARRYING OUT THE INVENTION

Hereinafter, a preferred embodiment of the present disclosure will be described in detail with reference to the accompanying drawings. Note that, in the present specification and drawings, components having substantially the same functional configuration are denoted by the same reference sign, and redundant description is omitted.

Furthermore, the description will be given in the following order.
1. Outline
2. Configuration
3. Operation Processing
4. Specific Example of Editing
   4-1. Editing Using Scene Graph
   4-2. Editing of Layout
   4-3. Editing of Asset
   4-4. Editing of Camerawork
   4-5. Addition of Element
5. Application Example
6. Supplementary Note

### <<1. Outline>>

As the present embodiment of the present disclosure, a system of visualizing a script (scenario) written in text will be described. The script is a text describing a story of a content. Examples of the content include a movie, a commercial message (CM), a drama, an animation, a distributed moving image, a play and the like, for example.

### (Sort of Problems)

In production of various moving images such as a movie, a CM, or an animation, generally, a script is first produced, and filming or animation production is performed on the basis of the produced script. Furthermore, in recent years, a simulation video (a so-called previsualization (previs) video) for imagining a completed state is also generated before actual filming or animation production. The previs video is a simple moving image generated using a 3D model. By generating the previs video, it is possible to solidify an image of a completed content, to do trial and error of a camerawork, arrangement of a character or the like, and it becomes easy to share the image of the completed content among producers.

In a case where such previs video is automatically generated by text analysis, a case where the video is not intended by the user is assumed. However, editing of the previs video generated by using the 3D model requires a change in arrangement of an asset in a 3D space and the like, which is complicated work.

Therefore, the present embodiment makes it possible to output information indicating a positional relationship of components acquired from the script for making an editing work in visualization of the script easy.

### <<2. Configuration>>

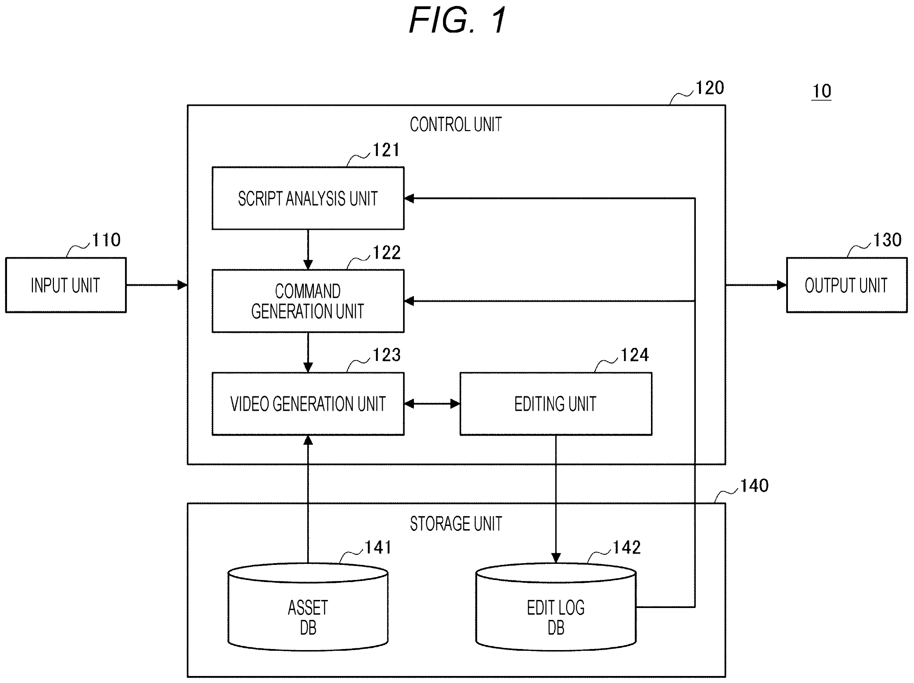

Fig. 1 is a block diagram illustrating an example of a configuration of an information processing device 10 according to the present embodiment. As illustrated in Fig. 1, the information processing device 10 includes an input unit 110, a control unit 120, an output unit 130, and a storage unit 140.

### (Input Unit 110)

The input unit 110 receives input information to the control unit 120. The input unit 110 may be an operation unit that receives a user operation. Furthermore, the input unit 110 may be a reception unit that receives information from an external device. For example, the user inputs a script and performs an operation of giving an instruction of analysis and visualization of the script.

### (Control Unit 120)

The control unit 120 functions as an arithmetic processing device and a control device, and controls an entire operation in the information processing device 10 in accordance with various programs. The control unit 120 is implemented by an electronic circuit such as a central processing unit (CPU), a graphics processing unit (GPU), a microprocessor or the like, for example. Furthermore, the control unit 120 may include a read only memory (ROM) that stores programs, operation parameters and the like to be used, and a random access memory (RAM) that temporarily stores parameters and the like that change as necessary.

The control unit 120 also functions as a script analysis unit 121, a command generation unit 122, a video generation unit 123, and an editing unit 124.

The script analysis unit 121 analyzes the script input from the input unit 110, acquires information of each scene, and acquires meta information. In the present embodiment, an analysis result of the script includes the meta information that is an example of information regarding components obtained from the script. The script analysis unit 121 outputs the acquired meta information to the command generation unit 122.

A story of the content is described in the script. Specifically, for example, a description (appearance, personality and the like) of a character (character), a description of a world view, whether each scene is an indoor scene or an outdoor scene, a place, a time period (morning, daytime, night and the like) of each scene, a description (introduction, situation, environment, outline and the like) of the scene, an action description, an expression, a speech and the like of the character, are described. Furthermore, the script also describes the camerawork or angle of view in some cases.

The script analysis unit 121 analyzes the script in which the story of the content is described in a natural language as described above, and extracts a type (gender, race, age group, occupation, relationship with other characters and the like), an appearance (body type, clothes, hairstyle, facial expression and the like), arrangement (position, positional relationship with another person or object and the like), and a moving manner (information regarding a gesture, a movement or the like) of the character appearing in each scene as the meta information. Furthermore, the script analysis unit 121 extracts a type (vehicle, chair, desk and the like), an appearance (shape, size, color and the like), arrangement, and a moving manner of an object appearing in each scene as the meta information. Furthermore, the script analysis unit 121 extracts information of a type (in room, seashore, snowy mountain and the like) of a place, a background or the like appearing in each scene, and a description (size, atmosphere and the like) as the meta information. Furthermore, there is a case where a camerawork or a composition is described in the script, and the script analysis unit 121 can also extract the camerawork or the composition as the meta information.

Furthermore, the script analysis unit 121 can also estimate, from the script, information (type, appearance, arrangement, moving manner and the like) regarding a character or an object that is not directly described in the script, information regarding the camerawork, the composition, an illumination environment, a background and the like, as the meta information.

In the estimation of the arrangement, for example, in a case of a scene where a person A and a person B are talking, positional relationship information (arrangement) that the person A and the person B are close to each other is estimated. Furthermore, in a case where it is described in the script that the person B is sitting on a chair, positional relationship information (arrangement) such as "sitting on a chair" is estimated regarding the arrangement of the person B.

The illumination environment (indoor brightness environment, outdoor brightness environment, morning brightness environment, night brightness environment and the like) can be estimated from the information such as "outdoors, indoors" and "morning, daytime, evening, night" described in the script. As the camerawork, prescribed camerawork may be appropriately applied according to movement and presence or absence of speech of a character, a situation of a scene and the like. For example, in a scene where the person A enters the room, the camerawork can be automatically generated such as a camera position with a composition in which at least an entire body of the person A enters, then a camera movement for tracking the person A moving in the room, further a close-up picture of a face of the person A in a scene where the person A speaks, and a close-up picture of a face of the person B when the person B answers.

The script analysis unit 121 can also estimate an environmental sound, a sound effect, background music (BGM), music, a type of voice and the like that are not directly described in the script from the script as the meta information.

A meta information estimation algorithm is not particularly limited, but the script analysis unit 121 may estimate the meta information newly prepared according to a predetermined description, or may estimate the meta information from the predetermined description by machine learning. Furthermore, the script analysis unit 121 may overwrite the meta information extracted from the script with the estimated meta information, or may correct the extracted meta information on the basis of an estimation result.

The above-described meta information is an example of information regarding the components (character, object, place and the like) obtained from the script. The meta information according to the present embodiment is not limited to the above-described example.

The command generation unit 122 generates the command information for visualizing each scene on the basis of the meta information acquired by the script analysis unit 121. For example, a camera position command (for example, "set_camera(pos_A)), a character object movement command (for example, "move(Character:A,pos_B,pos_C,walk,30sec) and the like are generated.

Regarding the arrangement of the characters or objects, for example, in a case where the meta information of the arrangement of the person A acquired by the script analysis unit 121 is "near the desk", the command generation unit 122 converts the meta information into a specific numerical value such as 3 m and converts the meta information into a command.

The video generation unit 123 generates a previs video (an example of a moving image) on the basis of the command information (command file) generated by command generation unit 122. That is, the video generation unit 123 can visualize the script.

In accordance with the command information, the video generation unit 123 searches for a necessary asset (image, 3D model, sound (sound effect, environmental sound, BGM, music), voice (voice synthesis data), motion data) in an asset database (DB) 141 and arranges the asset in a 3D space, and sets time-series data in a case of the command information indicating a dynamic change, thereby generating a 3D animation.

The command information also includes information used for asset search on the basis of the meta information regarding the appearance of the character or object. For example, the video generation unit 123 searches the asset DB 141 for a corresponding asset (here, a 3D model of a character) on the basis of "woman, normal body shape, 30s, Caucasian, long hair, office casual" and the like. The asset DB 141 includes data of an asset body and definition data that is data for searching and managing each asset.

In the present embodiment, it is assumed that asset data such as a basic 3D model, sound, voice, and motion is stored in the asset DB 141 in advance, but the present invention is not limited thereto, and an asset created by the following method may be searched for so that the user can use a favorite asset.

For example, a creating method by a generation-system AI technology, a scanning technology, or a CG application can be mentioned. Furthermore, examples of a generating method of a sound or a voice include recording by the user himself/herself. The user may give an instruction from the input unit 110 to create and use a preferred asset by these methods. For example, the user can input an analysis result (meta information) of the script to the generation-system AI application, causes the same to generate a necessary asset in real time, and use the same in each scene. Furthermore, the user may give an instruction from the input unit 110 to acquire an asset the user wants to use from an asset store on the network and use the asset.

The previs video generated by the video generation unit 123 is output to a display unit, which is an example of the output unit 130. In this manner, the information processing device 10 according to the present embodiment can output the previs video in response to the input of the script.

The editing unit 124 has a function of editing the previs video. In the present embodiment, the previs video is output in response to the input of the script, but it is also assumed that the user who has viewed the previs video wants to correct (edit) the previs video. Therefore, the editing unit 124 receives an editing operation by the user on the screen displaying the analysis result used to generate the previs video, and changes the analysis result used to generate the previs video, thereby implementing editing of the previs video. Specifically, the editing unit 124 changes the command information used to generate the previs video in the video generation unit 123. Note that, the editing unit 124 may change the meta information acquired by the script analysis unit 121.

One of the editing contents is a change in arrangement (positional relationship) of each asset (character, object). Although editing the positional relationship of each asset in the 3D space is a complicated work, in the present embodiment, the editing work can be simplified by using a scene graph indicating the positional relationship of each asset (an example of the positional relationship of one or more components forming the scene). Details of an editing method using the scene graph will be described later.

Note that, the editing that the user can perform from an editing screen is not limited to the arrangement change of each asset using the scene graph, and the type, appearance, position, and moving manner of each asset, the type, position, and moving manner of the camerawork, the type, length, and reproduction speed of sound or voice and the like can be changed.

Furthermore, the editing unit 124 stores an edit log obtained by editing each asset by the user in an edit log DB 142. The edit log stored in the edit log DB 142 is used to improve the accuracy of script analysis in the script analysis unit 121 or improve the accuracy of command generation in the command generation unit 122.

### {Improvement in Accuracy of Script Analysis or Command Generation}

The script analysis unit 121 or the command generation unit 122 can improve the analysis accuracy or the command generation accuracy by using the edit log stored in the edit log DB 142. It may be improved uniformly or may be improved for each individual. The edit log is associated with information of the script to be edited, the user who edits, the edited content, the editing date and time and the like. The edited content includes, for example, information before and after various types of editing for each asset (character, object, sound, voice), the location, illumination environment, or camerawork.

The script analysis unit 121 or the command generation unit 122 may apply improvement processing by dividing the conditions as follows. In a case where the improvement processing is applied, the script analysis unit 121 or the command generation unit 122 acquires tag information gathered in the edit log or generates a command.

### (1) Condition Division by Script

The script analysis unit 121 or the command generation unit 122 may apply the edit log in a case where genres (for example, a conversational play, an action, a horror and the like) of scripts are the same or similar. The script analysis unit 121 or the command generation unit 122 may apply the edit log in a case where locations (for example, indoors, outdoors, town, field, sea, space and the like) of the scenes are the same or similar. The script analysis unit 121 or the command generation unit 122 may apply the edit log in a case where types (for example, for movie, animation, virtual reality (VR), augmented reality (AR), distribution site and the like) of the video contents are the same or similar.

### (2) Condition Division by User

The script analysis unit 121 or the command generation unit 122 may apply the edit log of the user himself/herself. For example, when extracting or estimating the tag information from the description of the script, the script analysis unit 121 generates the tag information reflecting the edited content on the basis of the edit log of the user.

The script analysis unit 121 or the command generation unit 122 may apply the edit log of another user having the same editing characteristic of the user. Examples of the editing characteristic include, for example, a characteristic in which there are many changes in "type, appearance" such as the change in asset, a characteristic in which there are many changes in "arrangement, moving manner" such as layout or camerawork, a characteristic in which there are many changes in specific objects (for example, human, animal, vehicle, furniture, building, natural object, weapon or the like).

Furthermore, the script analysis unit 121 or the command generation unit 122 may apply the edit log of another user to the user uniformly.

### (3) Number of Editing Times or Condition Division Based on Tendency

The script analysis unit 121 or the command generation unit 122 may apply a specific edit log having a large total number of editing times. The script analysis unit 121 or the command generation unit 122 may apply a specific edit log having a rapidly increased number of editing times.

The various functions of the control unit 120 described above can be executed by a dedicated application.

### (Output Unit 130)

The output unit 130 outputs information under the control of the control unit 120. Examples of the output unit 130 include a display unit, a voice output unit, and a transmission unit, for example.

The display unit and the voice output unit output the previs video (which may include voice) generated by the video generation unit 123. Furthermore, the transmission unit may transmit the previs video to an external device.

Furthermore, the output unit 130 may acquire an animation data file in which information (at what time point and in which position or direction the asset is displayed) regarding each asset in the previs video is described from the control unit 120 and transmit the same to an external device. The control unit 120 can generate the animation data file in which the information regarding each asset is arranged in time series on the basis of the previs video. As a result, it is also possible to hand over the generated previs video to another 3DCG software and edit the same more finely. Note that, another 3DCG software may be installed in the control unit 120.

### (Storage Unit 140)

The storage unit 140 is implemented by a ROM that stores programs, arithmetic parameters and the like to be used for the processing of the control unit 120, and a RAM that temporarily stores parameters and the like that change appropriately. The storage unit 140 according to the present embodiment includes the asset DB 141 and the edit log DB 142.

The configuration of the information processing device 10 has been specifically described above. Note that, the configuration of the information processing device 10 according to the present embodiment is not limited to the example illustrated in Fig. 1. For example, the information processing device 10 may include a plurality of devices. Furthermore, the reception unit included in the input unit 110 and the transmission unit included in the output unit 130 may be implemented by a communication unit.

### <<3. Operation Processing>>

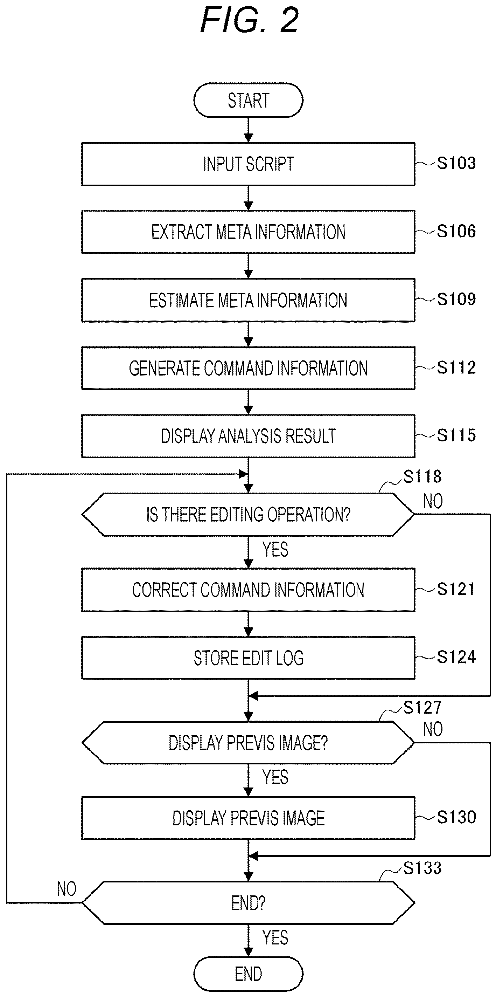

Fig. 2 is a flowchart illustrating an example of operation processing according to the present embodiment.

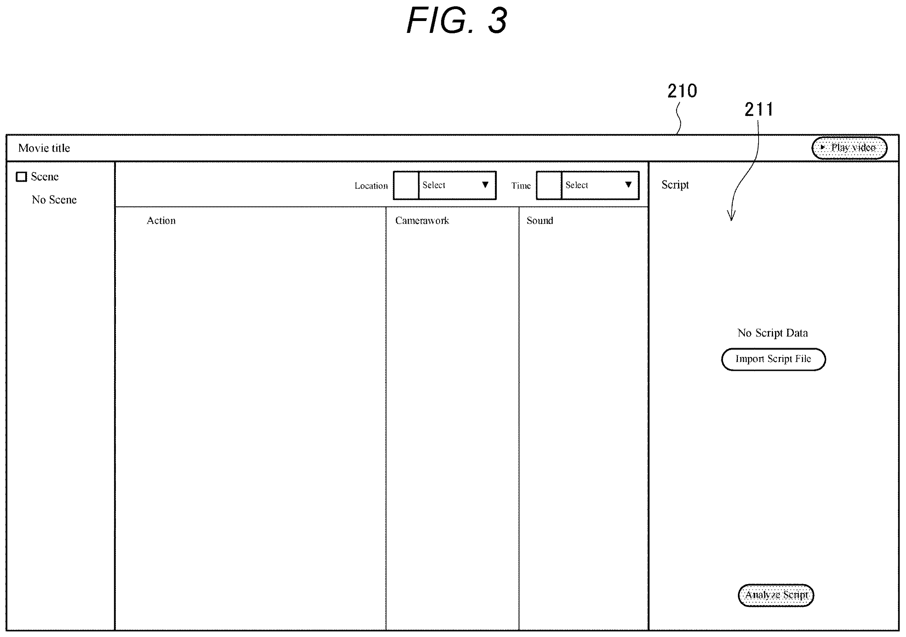

As illustrated in Fig. 2, first, the data of the script is input from the input unit 110 of the information processing device 10 (step S103). Fig. 3 is a diagram illustrating an example of an operation screen according to the present embodiment. As illustrated in Fig. 3, a script input area 211 is displayed on a right side of the operation screen 210. The user may input a script by text in the script input area 211, or may import a script described by text by file. Furthermore, the user selects an "analyze script button" displayed when inputting the script, and starts analyzing the script.

Next, the script analysis unit 121 analyzes the script, extracts the meta information (step S106), and estimates the meta information (step S109).

Next, the command generation unit 122 generates the command information (step S112).

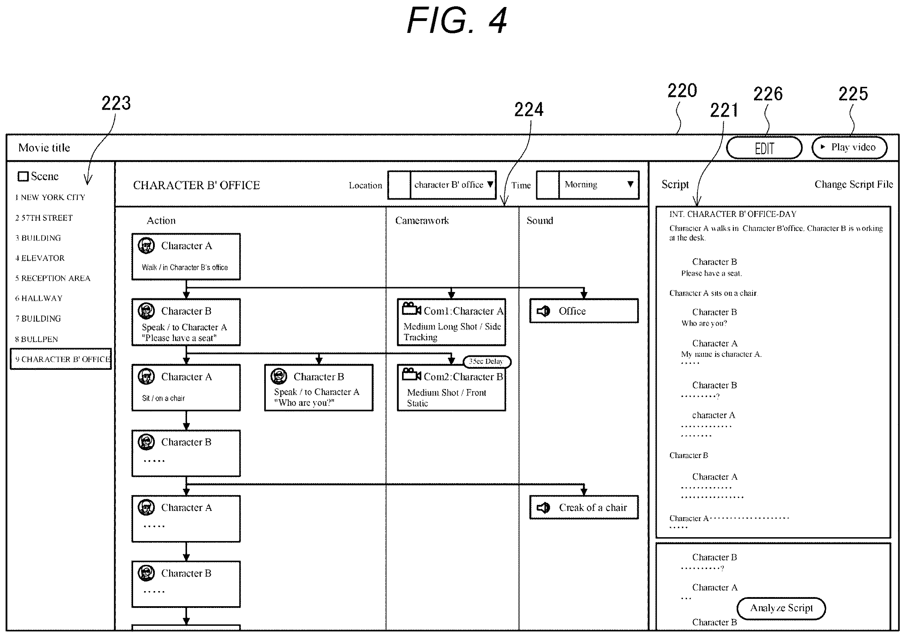

Next, the control unit 120 displays an analysis result of the script (step S115). Fig. 4 is a diagram illustrating an example of the operation screen according to the present embodiment. As illustrated in Fig. 4, a scene list 223 obtained by analyzing the script is displayed on a left end of the operation screen 220. When one scene is selected from the scene list, as illustrated in the center of the operation screen 220, a timeline 224 is displayed in which blocks indicating speeches and actions of characters appearing in the selected scene, blocks indicating camerawork, and blocks indicating contents of sounds (sound effect, environmental sound, BGM) are illustrated in time series from the top to the bottom of the screen. The input script 221 is displayed on a right end of the operation screen 220. As a result, the user can visually confirm the analysis result of the script. The user selects a play video button 225 in a case where the user wants to confirm the previs video, and selects an edit button 226 in a case where the user wants to edit the previs video. When the play video button 225 is selected, the previs video is reproduced, and when the edit button 226 is selected, the editing screen is displayed.

Next, in a case where there is an editing operation from the editing screen (step S118/Yes), the editing unit 124 corrects the command information used to generate the previs video according to the editing operation by the user (step S121), and stores the edit log in the edit log DB 142 (step S124). The editing screen will be described later in detail.

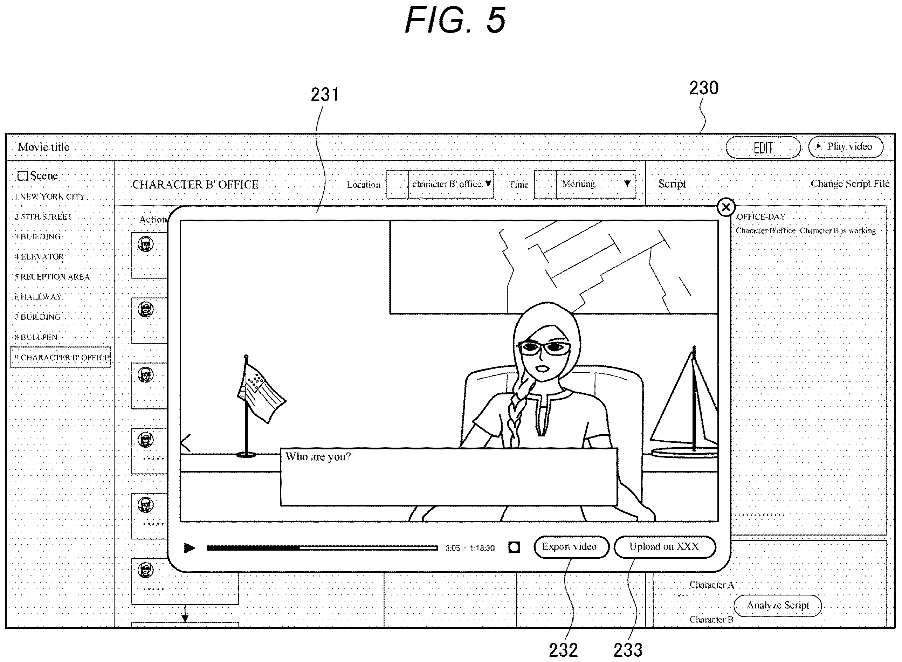

In contrast, in a case where an instruction to display the previs video is given (step S127/Yes), the video generation unit 123 generates and displays the previs video on the basis of the analysis result (specifically, command information generated on the basis of the tag information obtained by analysis) (step S130). Fig. 5 is a diagram illustrating an example of the display screen of the previs video according to the present embodiment. As illustrated in Fig. 5, for example, a previs video 231 is pop-up displayed on the operation screen 230. The previs video 231 herein displayed may be a video corresponding to a currently selected scene. The user confirms the previs video, selects an export button 232 if editing is unnecessary, and exports the previs video as a moving image file. Furthermore, the user can select an upload button 233 to a predetermined moving image distribution site (for example, "XXX") to upload the previs video to the predetermined moving image distribution site as it is. In a case where editing is necessary, the user can close the previs video 231 and edit from the editing screen.

The above-described editing of the analysis result and display of the previs video can be repeatedly performed until it is completed (step S133).

An example of a flow of the operation processing according to the present embodiment has been described above. Note that, the operation processing illustrated in Fig. 2 is an example, and the present disclosure is not limited to this.

### <<4. Specific Example of Editing>>

Subsequently, a specific example of the editing screen according to the present embodiment will be described with reference to the drawings.

### <4-1. Editing Using Scene Graph>

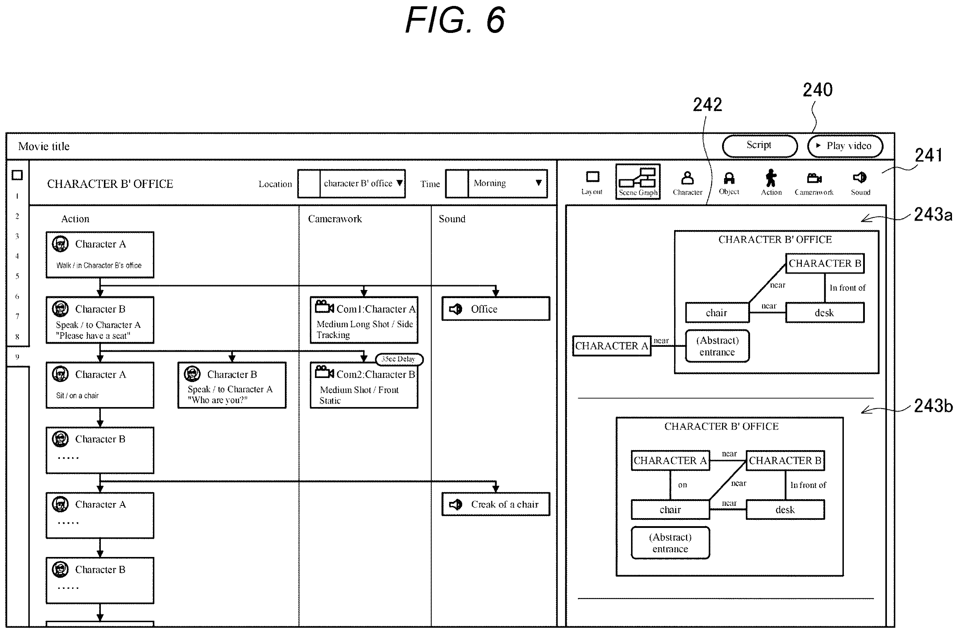

Fig. 6 is a diagram illustrating an example of the editing screen using the scene graph according to the present embodiment. On a right side of the operation screen 240 illustrated in Fig. 6, a scene graph editing screen 242 in which scene graph display screens 243 are displayed in time series from the top to the bottom is displayed. The scene graph editing screen 242 is displayed when "scene graph" is selected from an edit menu display 241. Note that, the edit menu display 241 can be displayed by selecting the edit button 226 illustrated in Fig. 4.

The scene graph display screen 243 (243a, 243b) illustrated in Fig. 6 is an example of information indicating a positional relationship of one or more components forming a scene. The scene graph display screen 243 is generated and displayed by the control unit 120 on the basis of the analysis result (specifically, the tag information) by the script analysis unit 121. The components are characters and objects appearing in a scene. A positional relationship between the characters and objects is expressed by a "scene graph".

Furthermore, in the scene graph, the characters and objects are represented by nodes, and their positional relationship is represented by an edge and a word added to the edge. One scene graph continues until the positional relationship between the nodes changes along the time series of the script, and a next scene graph is generated when the positional relationship changes.

Specifically, for example, by the analysis result of the text of the script "A walks in B's office. B is working at the desk. B: "Please have a seat." A sits on a chair. B: "Who are you?"", a first scene graph display screen 243a as illustrated in Fig. 6 (positional relationship before the character B enters the room), and a second scene graph display screen 243b (positional relationship when the character B enters the room and has a seat) are generated. As described above, the analysis result includes the tag information extracted from the description of the script and the tag information estimated from the description of the script. The positional relationship (arrangement) between the characters and objects is also extracted and estimated as the tag information by the script analysis unit 121.

By using the scene graph, the user can visually confirm the positional relationship between the characters and objects and the change in positional relationship. In a case where the positional relationship is not analyzed as intended, the user can move, add, or delete the nodes, add, delete, or change the edge, change connection between the node and edge, or change the word indicating the positional relationship added to the edge. In this manner, in the present embodiment, by enabling editing using the scene graph, it is possible to simplify "editing of the position of the character or object in the 3D space", which has conventionally been a complicated work.

### <4-2. Editing of Layout>

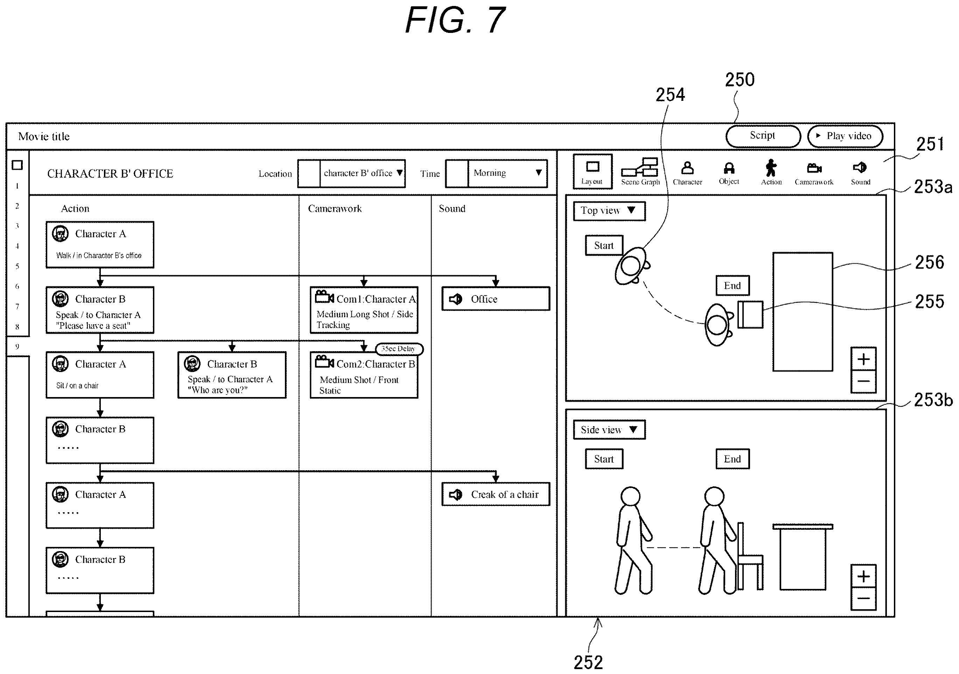

Fig. 7 is a diagram illustrating an example of the editing screen of the layout according to the present embodiment. On a right side of the operation screen 250 illustrated in Fig. 7, a layout editing screen 252 including a layout display screen 253a of Top View and a layout display screen 253b of Side View is displayed. The layout editing screen 252 is displayed when "layout" is selected from the edit menu display 251. Note that, the edit menu display 251 can be displayed by selecting the edit button 226 illustrated in Fig. 4.

The layout display screen 253 (253a, 253b) illustrated in Fig. 7 is an example of information indicating the positional relationship of one or more components forming a scene. The layout display screen 253 is generated and displayed by the control unit 120 on the basis of the analysis result (specifically, the tag information) by the script analysis unit 121.

On the layout display screen 253, the positional relationship between the character and object is expressed by simple arrangement of a person image and an object image. The user moves each element (person image 254, chair image 255, desk image 256 and the like) to change the position on the layout display screen 253a in Top View (top view) in a case where the user wants to edit a horizontal position of the character and object, and on the layout display screen 253b in Side View (side view) in a case where the user wants to edit a vertical position. As a result, in the present embodiment, the layout can be adjusted more easily than when an operation is performed in a 3D space having a depth like an existing 3DCG application.

### <4-3. Editing of Asset>

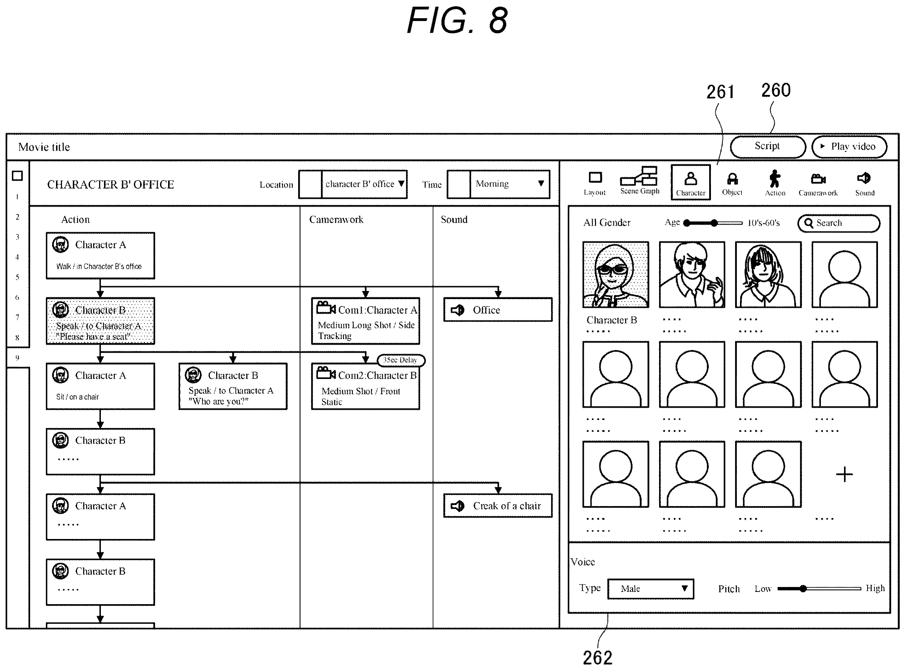

Fig. 8 is a diagram illustrating an example of the editing screen of the asset according to the present embodiment. An asset editing screen 262 for editing an asset applied to a person is displayed on a right side of the operation screen 260 illustrated in Fig. 8. The asset editing screen 262 is displayed when "character" is selected from the edit menu display 261. Note that, the edit menu display 261 can be displayed by selecting the edit button 226 illustrated in Fig. 4. Although the editing of the asset of the person has been illustrated as an example in Fig. 8, the asset of the object can be similarly edited.

The asset (3D model, motion data, image such as background, sound, and voice) of the character or object can be changed to one registered in advance in the asset DB 141 or one created separately. In a case where the user wants to add a new asset, the user selects "+ button" displayed on the lower right of the asset editing screen 262 and adds the asset to the list. Furthermore, in a case where the number of assets increases to such an extent that the list cannot be displayed, the user inputs a search condition in a search window displayed on the upper right of the asset editing screen 262 to narrow down displayed assets.

### <4-4. Editing of Camerawork>

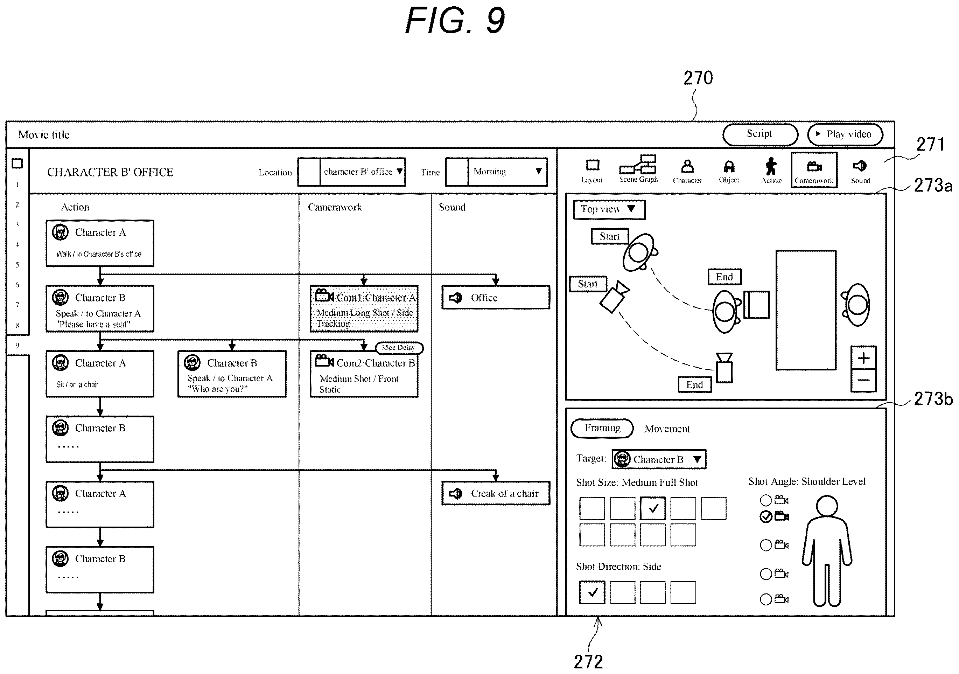

Fig. 9 is a diagram illustrating an example of the editing screen of the camerawork according to the present embodiment. On a right side of the operation screen 270 illustrated in Fig. 9, a camerawork editing screen 272 including a screen 273a displaying the position and the moving manner of the camera, and a screen 273b displaying a type of camera shot are displayed. The camerawork editing screen 272 is displayed when "camerawork" is selected from the edit menu display 271. Note that, the edit menu display 271 can be displayed by selecting the edit button 226 illustrated in Fig. 4.

The user changes camera shot settings (who is to be focused, how large the size of the person to be shot is, in which direction the person is shot and the like) on the screen 273b, and then finely adjusts the position and moving manner of the camera on the screen 273a.

### <4-5. Addition of Element>

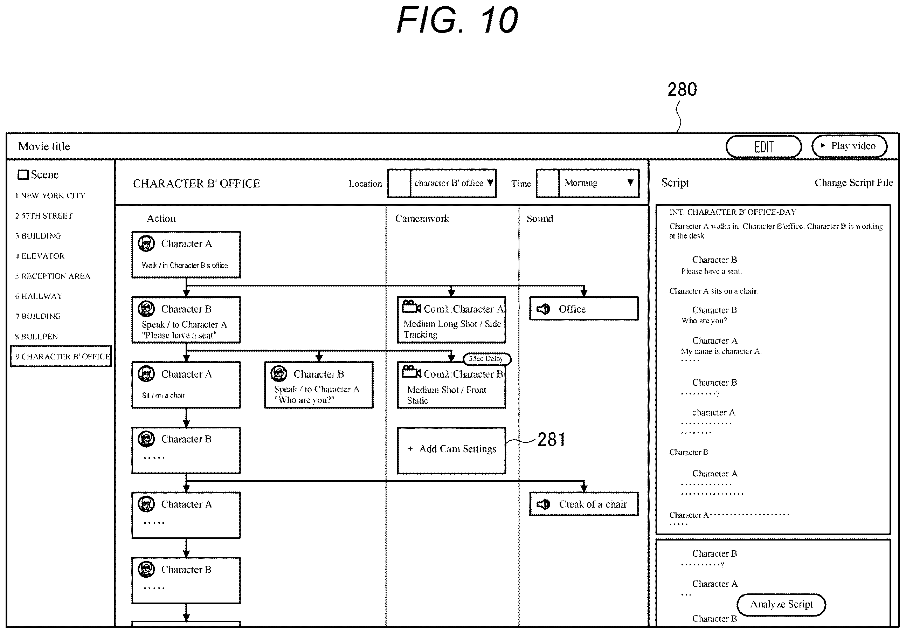

Fig. 10 is a diagram for illustrating a method of adding an element according to the present embodiment. In Fig. 10, as an example, a case where the camerawork is added will be illustrated.

In a case where the user wants to switch the camerawork at any timing, the user can add the camerawork by hovering, right clicking or the like at any position on the timeline of the camerawork illustrated in the center of the operation screen 280 in Fig. 10. As illustrated in Fig. 10, an additional block 281 of the camerawork is displayed in accordance with a user operation. Setting of the added camerawork can be performed on the editing screen of the camerawork as described with reference to Fig. 9.

In contrast, in a case where the user wants to delete the generated camerawork, the user performs an operation of selecting and deleting a target camerawork block displayed on the timeline of the camerawork.

Although a case of the camerawork has been described above, the addition and deletion of the element can be similarly performed for the action or sound of the character displayed on the timeline.

### <<5. Application Example>>

Subsequently, application examples of the present embodiment will be described.

### <5-1. Use in Movie or Animation Production Studio>

Generation of a previs video based on text analysis according to the present embodiment and an editing method thereof can be used in a movie or animation production studio.

By using the present embodiment, it is possible to automate the production of a storyboard, a video storyboard, or a previs video in a movie or animation production studio, and to reduce a cost required for the production. In particular, the production cost of the previs video is higher than that of the storyboard and the like, and conventionally, the previs video is often used only in some scenes of a movie or an animation with a large budget, but according to the present embodiment, the previs video can be produced in many movies or animations.

Furthermore, the conventional previs video is often produced by outsourcing. In contrast, although the script is frequently updated even after filming is started, it is difficult to outsource the correction of the previs video in accordance with the update of the script from the viewpoint of cost, and the previs video of the scene in which the script is updated has no use value. In the present embodiment, by automatically generating the previs video again in accordance with the update of the script, the previs video can be maintained in the latest state, and it becomes easy to achieve the original purpose (casting, location hunting, optimization of procurement management cost of filming equipment, properties and the like) of the previs video.

Furthermore, in a case where a CG artist is requested to produce a 3D model or an animation necessary for a CG video, a requester (supervisor, producer and the like) himself/herself automatically produces a previs video according to the present embodiment and provides the previs video, so that it is possible to avoid miscommunication due to an ambiguous instruction. As a result, it is possible to reduce the cost required for the instruction of design, layout, and animation to the CG artist.

### <5-2. Use in VR or AR Content Production Studio>

In the above-described embodiment, as an example, a case has been described where a script described in text is analyzed to automatically generate a previs video; however, a generated video (a moving image using an asset) is not limited to a moving image referred to as a previs video.

Generation of a moving image based on text analysis according to the present embodiment and an editing method thereof can be used in a VR or AR production studio.

In order to create an α-version moving image before a content is elaborated for a client of the content ordering source, it has been conventionally necessary for a content planer to instruct and entrust a designer or an engineer to produce the moving image; however, according to the present embodiment, a planer himself/herself who does not have a CG production skill can produce the α-version moving image, and obtain approval of the client at an earlier timing.

Furthermore, the planner himself/herself can create the α-version moving image, thereby avoiding miscommunication due to an ambiguous instruction to the designer or the engineer. As a result, it is possible to reduce the cost required for the instruction of design, layout, and animation.

Furthermore, in the conventional AR content production, it has been difficult to confirm "how the planned content looks to the user" unless simulation is performed on the CG application after the content is elaborated; however, according to the present embodiment, it is possible that the planner simulates how the content looks at the stage when the planer creates the α-version moving image. Specifically, by implementing the "viewpoint from an any character" as one of the cameraworks and moving the character according to the script in a virtual space, it is possible to simulate how it looks to the user.

### <5-3. Use by Moving Image Distributor>

The generation of the moving image based on the text analysis and the editing method thereof according to the present embodiment can also be used by a moving image distributor, for example.

A user who posts a moving image using an image or a CG on a moving image distribution site searches for free or paid materials on the Internet, or entrusts creation of the materials to another person, so that it takes temporal and financial costs. Therefore, according to the present embodiment, the user himself/herself can visualize the planned content, and the temporal and financial costs are reduced.

### <5-4. Use by NFT Artist>

A non-fungible token (NFT) artist who designs a character by handwriting or CG and sells the character as an NFT work on a market place brand the world view of the produced character, and also advertises and sells derivative characters and content of the same world view (collectively referred to as "collection"), thereby obtaining a long-term revenue. Therefore, it is effective to visualize a background story related to a character or a world view and spread the same on an SNS, but many NFT artists do not have video production skills, and video production has been difficult.

Therefore, by registering the produced character as an additional asset using the present embodiment, the NFT artist himself/herself can produce a video in which the character appears.

### <5-5. Use in Generation of Real Estate Introduction AR Content>

The present embodiment can also be used for generation of AR content for real estate introduction. For example, in a case of creating the AR content in which a virtual guide character guides equipment of a room A and a room B of an apartment, the AR content can be generated by the following procedure.

First, the user designates a "position" at which the guide character describes each equipment and the like in the room in the room layout, and sets a designation (for example, "kitchen", "balcony", "bedroom", "bathroom" and the like) of each position.

Next, the user describes "moving manner" and "talk content" of the guide character as a script. At that time, the "designation of each position" set above is used.

Then, according to the present embodiment, an indoor video and the like is registered as an additional asset on the basis of the created script, so that even a staff of a real estate company who does not have a video production skill can produce a video in which a guide character guides the room.

Note that, since equipment of each room of an apartment is often similar, once a script is created, it is possible to prepare a script corresponding to a plurality of rooms only by copying the script and adding and correcting necessary portions for other rooms.

### <<6. Supplementary Notes>>

The preferred embodiment of the present disclosure has been described above in detail with reference to the accompanying drawings, but the present technology is not limited to such an example. It is obvious that those with ordinary skill in the technical field of the present disclosure can conceive of various alterations or corrections within the scope of the technical idea recited in claims, and it is naturally understood that those alterations or corrections also fall within the technical scope of the present disclosure.

Furthermore, it is also possible to create one or more computer programs for causing hardware such as the CPU, the ROM, and the RAM built in the information processing device 10 described above to exhibit the functions of the information processing device 10. Furthermore, a computer-readable storage medium that stores the one or more computer programs is also provided.

Furthermore, the effects described in the present specification are merely exemplary or illustrative, and are not restrictive. That is, the technology according to the present disclosure can exhibit other effects apparent to those skilled in the art from the description of the present specification, in addition to the effects described above or instead of the effects described above.

Note that, the present technology may also have the following configurations.
(1) An information processing device including:
   a control unit that
   acquires information regarding a component from an input script,
   performs processing of generating, from the information regarding the component, information indicating a positional relationship of one or more components forming a scene, and
   performs processing of outputting the information indicating the positional relationship.
(2) The information processing device according to (1) described above, in which the control unit receives editing operation information of a position of the component with respect to a display screen on which an image corresponding to the component is arranged, the display screen displaying the positional relationship, and edits target information according to the editing operation information.
(3) The information processing device according to (2) described above, in which the target information is meta information indicating the position of the component.
(4) The information processing device according to (2) described above, in which the target information is command information in which meta information indicating the position of the component is made a command for generating a moving image.
(5) The information processing device according to any one of (2) to (4) described above, in which the control unit stores the editing operation information in a database as an edit log, and uses the edit log when acquiring the information regarding the component.
(6) The information processing device according to any one of (1) to (5) described above, in which the control unit outputs, as the information indicating the positional relationship of the component, a scene graph indicating the components as nodes and a positional relationship between the components as an edge and a word, to a display unit.
(7) The information processing device according to (6) described above, in which the scene graph is generated each time the positional relationship of the components changes, and one or more scene graphs are displayed in time series.
(8) The information processing device according to any one of (1) to (7) described above, in which the control unit outputs, as the information indicating the positional relationship of the components, a layout of at least one of a top view or a side view in which an image corresponding to the components is arranged, to a display unit.
(9) The information processing device according to any one of (1) to (8), in which
   the control unit:
   additionally displays information of camerawork acquired from the script on a display screen on which an image corresponding to the component is arranged, the display screen displaying the positional relationship; and
   receives editing operation information for changing a setting of a position, a moving manner, or a camera shot of a camera displayed on the display screen, and edits target information according to the editing operation information.
(10) The information processing device according to any one of (1) to (9) described above, in which the component is a character or an object appearing in each scene of the script.
(11) The information processing device according to any one of (1) to (10) described above, in which the control unit analyzes a text of the script and acquires a type, an appearance, an arrangement, and a moving manner of a character or an object appearing in each scene, a type and a description of a place, information of camerawork, information of an illumination environment, and a type of sound as the information regarding the component.
(12) The information processing device according to any one of (1) to (11) described above, in which the control unit generates a moving image on the basis of the information regarding the component acquired from the script.
(13) The information processing device according to (12) described above, in which the moving image is a previs video.
(14) An information processing method including:
   acquiring information regarding a component from an input script;
   generating, from the information regarding the component, information indicating a positional relationship of one or more components forming a scene; and
   outputting the information indicating the positional relationship.
(15) A storage medium storing a program that causes a computer to function as a control unit that
   acquires information regarding a component from an input script,
   performs processing of generating, from the information regarding the component, information indicating a positional relationship of one or more components forming a scene, and
   performs processing of outputting the information indicating the positional relationship.

### REFERENCE SIGNS LIST

- 10: Information processing device
- 110: Input unit
- 120: Control unit
- 121: Script analysis unit
- 122: Command generation unit
- 123: Video generation unit
- 124: Editing unit
- 130: Output unit
- 140: Storage unit
- 141: Asset DB
- 142: Edit log DB

## Claims

1. An information processing device comprising:
a control unit that
acquires information regarding a component from an input script,
performs processing of generating, from the information regarding the component, information indicating a positional relationship of one or more components forming a scene, and
performs processing of outputting the information indicating the positional relationship.

2. The information processing device according to claim 1, wherein the control unit receives editing operation information of a position of the component with respect to a display screen on which an image corresponding to the component is arranged, the display screen displaying the positional relationship, and edits target information according to the editing operation information.

3. The information processing device according to claim 2, wherein the target information is meta information indicating the position of the component.

4. The information processing device according to claim 2, wherein the target information is command information in which meta information indicating the position of the component is made a command for generating a moving image.

5. The information processing device according to claim 2, wherein the control unit stores the editing operation information in a database as an edit log, and uses the edit log when acquiring the information regarding the component.

6. The information processing device according to claim 1, wherein the control unit outputs, as the information indicating the positional relationship of the component, a scene graph indicating the components as nodes and a positional relationship between the components as an edge and a word, to a display unit.

7. The information processing device according to claim 6, wherein the scene graph is generated each time the positional relationship of the components changes, and one or more scene graphs are displayed in time series.

8. The information processing device according to claim 1, wherein the control unit outputs, as the information indicating the positional relationship of the components, a layout of at least one of a top view or a side view in which an image corresponding to the components is arranged, to a display unit.

9. The information processing device according to claim 1, wherein
the control unit:
additionally displays information of camerawork acquired from the script on a display screen on which an image corresponding to the component is arranged, the display screen displaying the positional relationship; and
receives editing operation information for changing a setting of a position, a moving manner, or a camera shot of a camera displayed on the display screen, and edits target information according to the editing operation information.

10. The information processing device according to claim 1, wherein the component is a character or an object appearing in each scene of the script.

11. The information processing device according to claim 1, wherein the control unit analyzes a text of the script and acquires a type, an appearance, an arrangement, and a moving manner of a character or an object appearing in each scene, a type and a description of a place, information of camerawork, information of an illumination environment, and a type of sound as the information regarding the component.

12. The information processing device according to claim 1, wherein the control unit generates a moving image on a basis of the information regarding the component acquired from the script.

13. The information processing device according to claim 12, wherein the moving image is a previs video.

14. An information processing method comprising:
acquiring information regarding a component from an input script;
generating, from the information regarding the component, information indicating a positional relationship of one or more components forming a scene; and
outputting the information indicating the positional relationship.

15. A storage medium storing a program that causes a computer to function as a control unit that
acquires information regarding a component from an input script,
performs processing of generating, from the information regarding the component, information indicating a positional relationship of one or more components forming a scene, and
performs processing of outputting the information indicating the positional relationship.
